# EUROPEAN PATENT SPECIFICATION

(11) **EP 3 284 884 B1**
(45) Date of publication and mention of the grant of the patent: **13.05.2020**
(21) Application number: 17195325.0
(22) Date of filing: 20.12.2013
(51) Int. Cl.: E05B 47/00, B25F 5/00, E05B 49/00, E05B 73/00, G07C 9/00, G08B 13/14, G07C 3/04

(54) **METHOD FOR DETERMINING THE DISTANCE BETWEEN TWO PRESENCE NODES.**
VERFAHREN ZUR BESTIMMUNG DES ABSTANDES ZWISCHEN ZWEI ANWESENHEITSNODES
PROCÉDÉ DE DETERMINATION DE DISTANCE ENTRE DEUX NOEUDS DE PRÉSENCE

(30) Priority: 21.12.2012 SE 1251511; 21.12.2012 US 201261740712 P
(43) Date of publication of application: 21.02.2018
(62) Divisional of application: 13864240.0
(73) Proprietor: Nida Tech Sweden AB, 216 23 Malmö (SE)
(72) Inventor: DACKEFJORD, Håkan, 125 51 ÄLVSJÖ (SE)
(74) Representative: Bergenstråhle Group AB

(56) References cited:
- EP-A1- 1 945 411
- EP-A2- 1 528 726
- CA-A1- 2 283 552
- US-A1- 2003 104 795
- US-A1- 2004 246 903
- US-A1- 2008 130 565

## Description

### Technical field

The present disclosure relates to a method in a first presence node adapted for determining the distance between said first presence node and a second presence node in a wireless communication network, this method being used in a method for enabling unlocking and locking of a tool.

### Background

Entrepreneurs and construction companies are using various machines and tools on construction sites. This ranges from the self-employed carpenter performing a renovation of a cottage all the way to the large construction company building entire new hospitals, districts, highways, bridges and other major projects. The workers doing the construction uses all kind of tools from pencils and knifes all the way to excavators and cranes. When it comes to power tools, also frequently used by the construction workers, they may involve a significant value in combination with a compact format. Such tools may include electric driven tools, fuel/gasoline driven tools, pneumatic driven tools, hydraulic driven tools, not limiting to similar powered tools. Examples of power tools are: screwdrivers, bolt gun, nail gun, impact drill, angle grinder, cutter, saw, reciprocating saw, not limiting to other types of tools. Obviously a crane may represent a large capital value, but it is rather unpractical for the simple thief or the regular criminal organization to steal a crane. However, the power tool is easy to carry away and may represent a significant value on a market, or may be used for other criminal activities. This is a vast problem for construction companies, which power tools is being stolen or just disappears from construction sites. The lost tools costs money to replace drives insurance costs, and delays planned work.

Another problem is where owner of tools, for example tool rental companies, is to get rental returns of tools in time or according to an agreement. Another problem, of a rather practical character, which yet may be troublesome, may be on a large construction site, to find tools being spread out over a large area or space. A method for reducing communications in a peer-to-peer wireless network having nodes is disclosed in US 2004/0246903 A1.

### Summary

It is an object of the invention to address at least some of the problems and issues outlined above. It is possible to achieve these objects and others by using a method as defined in the attached claims.

According to one example, a method is provided in a power tool for enabling unlocking and locking of the power tool for prevention of unauthorized use, the method comprising: receiving an unlock message to a control unit, the message including an instruction to unlock the tool, unlocking the power tool according to the instruction by the control unit via an actuator unit, counting an authorization time period from reception of the first message to the control unit by a counter, wherein when the counted authorization time period exceed a predetermined threshold, locking the power tool by the control unit via the actuator unit, thereby enabling prevention of unauthorized use of the power tool by remote unlocking and locking.

According to another example, a method is provided in a tool control node for enabling unlocking and locking of a tool for prevention of unauthorized use, the method comprising transmitting an unlock message to the tool, the message including an instruction to unlock the tool, counting an authorization time period from transmission of the unlock message to the tool, wherein when the counted authorization time period exceed a predetermined threshold, transmitting of a lock message including an instruction to lock the tool, thereby enabling prevention of unauthorized use of the tool by remote unlocking and locking.

According to another example, a power tool is provided adopted to enable unlocking and locking of the power tool for prevention of unauthorized use, the power tool adopted to receive an unlock message to a control unit, the message including an instruction to unlock the tool, unlock the power tool according to the instruction by the control unit via an actuator unit, count an authorization time period from reception of the first message to the control unit by a counter, wherein when the counted authorization time period exceed a predetermined threshold, lock the power tool by the control unit via the actuator unit, thereby enabling prevention of unauthorized use of the power tool by remote unlocking and locking.

In one possible example, the actuator unit is at least one of electrical switch, mechanical lock and semiconductor based switch. In another possible example, when a second unlock message is received before the predetermined threshold is reached, the counter is restarted, such that the power tool remains unlocked. In another possible example, the unlock message includes a first key, wherein, the first key is required by the control unit for authorization of the message. In another possible example, the drive unit requires at least one of the first key or a second key from the control unit, for enabling of the drive unit. In another possible example, a lock message is received by the control unit, the lock message including an instruction to lock the tool, wherein the tool is locked by the control unit via the actuator unit. In another possible example, a position message including an alert signal is received by the control unit, the position message including an instruction to repeatedly transmit a response signal as a response to the alert signal, thereby enabling positioning of the tool. In another possible example, the communication with the tool is encrypted. In another possible example, the tool has a physical tamper protection.

In another example, the positioning of the tool is instead made by the tool control unit. This could for example be done through means of a message including an alert signal is received by the control unit. The message triggers the control unit to transmit a signal requesting response signals from presence nodes nearby followed by receiving response signals to the control unit from presence nodes nearby and thereby enabling positioning of the tool. This allows for the positing to in one embodiment be made within the tool enabling for the tool to send a response comprising a position to for example the tool control node.

In another example, a power tool control unit adopted to enable unlocking and locking of a tool for prevention of unauthorized use is adopted to:
- transmit an unlock message to the tool, the message including an instruction to unlock the tool,
- determine the position of the tool and check if said tool is within a predetermined area,
- if the tool leave said predetermined area transmit a lock message including an instruction to lock the tool, thereby enabling prevention of unauthorized use of the tool.

The power tool control unit can further be configured to sound and transmit an alarm if said tool leaves the predetermined area.

Further possible features and benefits of this solution will become apparent from the detailed description below.

### Brief description of drawings

The solution will now be described in more detail by means of exemplary embodiments and with reference to the accompanying drawings, in which:
Fig. 1 is a block diagram illustrating the solution.
Fig 2 is a block diagram illustrating a power tool.
Fig. 3 is a flow chart illustrating a procedure in a power tool, according to possible embodiments.
Fig 4. is a signaling diagram illustrating an example of a delegation when the solution is used, according to further possible embodiments.
Fig. 5 is a communication scenario illustrating the solution, according to further possible embodiments.
Fig. 6 is a flow chart illustrating a procedure in a tool control node, according to possible embodiments.
Fig. 7A-C are illustrations of positioning scenarios for a power tool.
Fig. 8 illustrates examples of computer implementations.
Fig. 9 shows an illustration of relocation of a presence node.

### Detailed description

Briefly described, a solution is provided to avoid theft of power tools and other capital intensive machineries related to construction sites. By having a lock on a power tool, which default is locked, it may be less attractive for theft. A lock which is remotely controlled. Only when a user is authorized by the owner of the tool, the tool is unlocked. The tool may be unlocked for a specific period of time. The tool may further be unlocked within a specific geographical or a specific volume. An unlock message may be transmitted from a tool control node, which instructs the power tool to be unlocked. The power tool is then unlocked and fully usable for a certain time period, before the time period has passed, a new unlock message must be received by the power tool, otherwise it will be locked for further usage. So if the tool does not receive any unlock message or, if the tool is outside a specified area, it will automatically be locked and unusable. An owner of a tool may for some reason want to revoke an authorization from a user to use the tool, for example if an invoice is not paid for. Than may the tool owner transmit a lock message to the tool, such it becomes unusable. The tool owner may delegate a right to transmit unlock and lock messages to an intermediate, a presence node. An example may be the tool rental company delegating to a site manager. Such right may also be revoked.

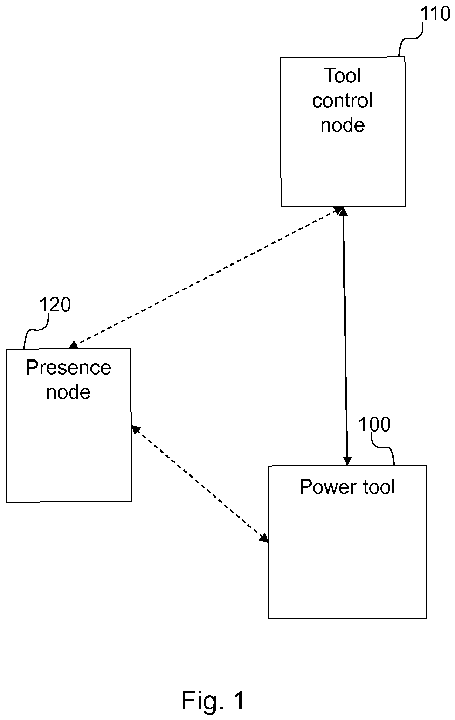

Now the solution will be described in more detail. Fig. 1 shows a block diagram with a power tool 100, a tool control node 110 for controlling power tools 100 and a presence node 120 for handling of delegated controlling of power tools 100.

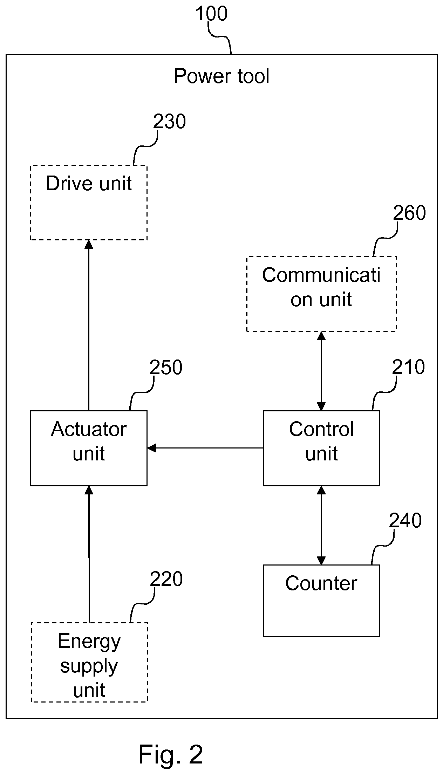

Fig. 2 shows a block diagram of the tool 100. The tool includes a control unit 210 for controlling unlocking and locking of the power tool 100 and other actions. The power tool 100 further includes a counter 240 for counting of time. The power tool 100 further includes an actuator unit 250 for unlocking and locking of the power tool 100. The power tool may also include an energy supply unit 220, a drive unit 230 and a communication unit 260 for reception and transmission of messages.

Power tool may also be denoted "device", appliances, powered machine, not limiting to other similar suitable terms. Appliances may include washer, dryer, dishwasher, heat pump, stove, oven, microwave, not limiting to other appliances used in a home or office. Tool control node may also be denoted "remote node" not limiting to other similar suitable terms. Presence node may also be denoted "mobile node" not limiting to other similar suitable terms. A few examples of the tool control node 110 may be, a server in a communications network, a virtual server in a communications network, a mobile phone or an application installed on a mobile phone, a PDA (Personal Digital assistant) or an application installed on a PDA, not limiting to other similar nodes. A few examples of a presence node 120 may be a mobile phone or an application installed on a mobile phone, a PDA (Personal Digital assistant) or an application installed on a PDA, a gateway, access switch, access router, WLAN access point (Wireless Local Area Network) not limiting to other similar nodes. The term "unlock" may also be denoted "enable", and the term "lock" may also be denoted "disabled".

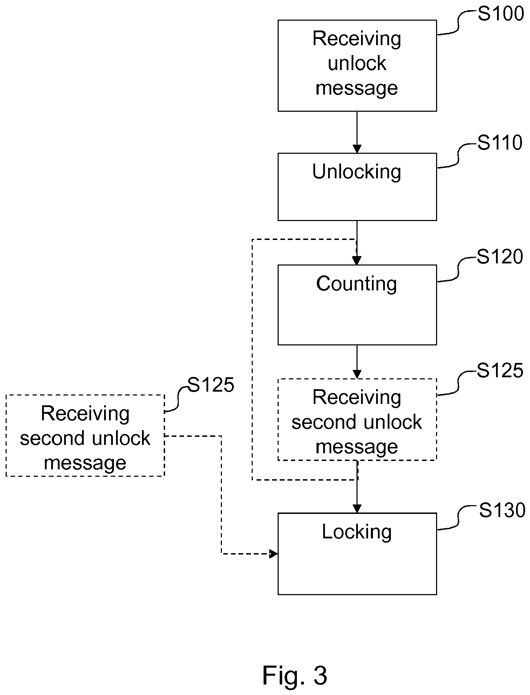

Fig. 3 shows a method in a power tool 100 for enabling unlocking and locking of the power tool for prevention of unauthorized use. The method comprises receiving **S100** an unlock message to a control unit 210, the message including an instruction to unlock the tool 100. The method further comprises unlocking **S110** the power tool 100 according to the instruction by the control unit 210 via an actuator unit 250. The method further comprises counting **S120** an authorization time period from reception of the first message to the control unit 210 by a counter 230, wherein when the counted authorization time period exceed a predetermined threshold, the power tool 100 is locked **S130** by the control unit (210) via the actuator unit (250), thereby enabling prevention of unauthorized use of the power tool (100) by remote unlocking and locking.

The unlock message may come from a tool control node 110. The message may be carried via wireless radio communication, for example such as WiFi according to IEEE 802.11 (Institute of Electrical and Electronics Engineers), RFID (Radio-frequency identification), Bluetooth, not limiting to other similar communication methods. Protocols used for carrying the message may be Ethernet, TCP/UDP/IP (Transmission Control Protocol/User Datagram Protocol/Internet Protocol). Further examples of protocols which may be used are; SMTP (Simple Mail Transfer Protocol), SMS/MMS (Short Message Service / Multimedia Messaging Service), HTTP/HTTPS (Hypertext Transfer Protocol/Secure), SIP/SIPS (Session Initiation Protocol/Secure), not limiting to other suitable protocols for messages or communication with a power tool 100. The message with the unlock instruction may also include other information, such as a time stamp, or the length of the authorization time period, not limiting to other information. The authorization time period may be a time period during which the power tool 100 may be unlocked and prepared for normal operation. During the authorization time period, the power tool 100 may be outside radio contact with for example the tool control node 110. The counter 230 counts the authorization time period, such when the authorization time period exceeds the predetermined threshold the power tool 100 is locked. When the power tool 100 is locked it may not be possible to use for normal operation. The threshold may be adjusted, for example by manually setting a different value, or by reception of a different value via the unlock message or the lock message.

In an example of the solution, the actuator unit 250 may be at least one of electrical switch, mechanical lock and semiconductor based switch. Depending of the propulsion of the power tool 100 different kinds of locks may be more or less suitable. A combination of an electrical switch, mechanical lock and semiconductor based switch may be used for locking the power tool 100. In an example of the solution, when a second unlock message is received before the predetermined threshold is reached, the counter 230 may be restarted, such that the power tool 100 remains unlocked. By this action, the power tool 100 may be used in normal operation without interruption. Unless the counter 230 is restarted by for example a second unlock message, the power tool 100 may be locked from normal operation. In an example of the solution, the unlock message may include a first key, wherein the first key may be required by the control unit 210 for authorization of the unlock message. By usage of the first key, it may be possible to authorize the unlock message or any other messages received by the tool 100. Thereby may the power tool 100 be enabled to protect itself from receiving or taking any actions based on unauthorized messages.

In an example of the solution, the drive unit 230 may require at least one of the first key or a second key from the control unit 110, for enabling of the drive unit 230. If the power tool for example has been stolen, and the control unit is replaced with a modified control unit, the power tool may then be prevented from unauthorized usage, because the drive unit may expect a correct key before propulsion of the power tool 100. In an example of the solution, a lock message may be received by the control unit 210, where the lock message may include an instruction to lock the tool 100, wherein the tool 100 may be locked by the control unit 210 via the actuator unit 250.

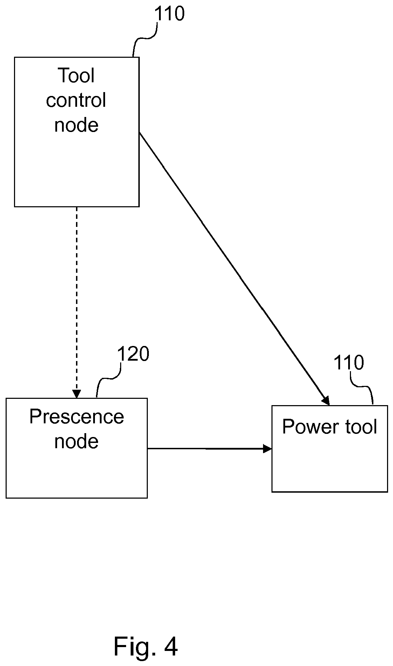

In an example of the solution, a position message including an alert signal is received by the control unit (210), the position message including an instruction to repeatedly transmit a response signal as a response to the alert signal, thereby enabling positioning of the tool (100). When a power tool 100 is missing, because it has been lost/misplaced or stolen, it may then be possible to position the tool. By the power tool 100 transmitting the response signal, it may then be possible to determine a distance to the power tool 100. It may also be possible to determine a direction to the power tool 100. It may also be possible to determine a position of the power tool 100. In an example of the solution showed in Fig. 4, the power tool 100 may be arranged to receive an alert signal from the control node 110. The alert signal may include an identification of the power tool 100, alerting the power tool 100 by matching the received identification with a preprogrammed identification of the power tool 100, transmitting a response signal to the alert signal, including the identification of the power tool 100 matching the received identification, thereby enabling determination of the position of the power tool 100. In an example, the power tool 100 is adapted to repeatedly transmit the response to the alert signal. Hereby, a risk that for instance a control node 110 does not receive the response due to poor signal strength/connectivity resulting e.g. from the position of the power tool 100 or the presence node 120 may be reduced. Another advantage may be, if the power tool 100 changes locations, it may be possible to determine the new position.

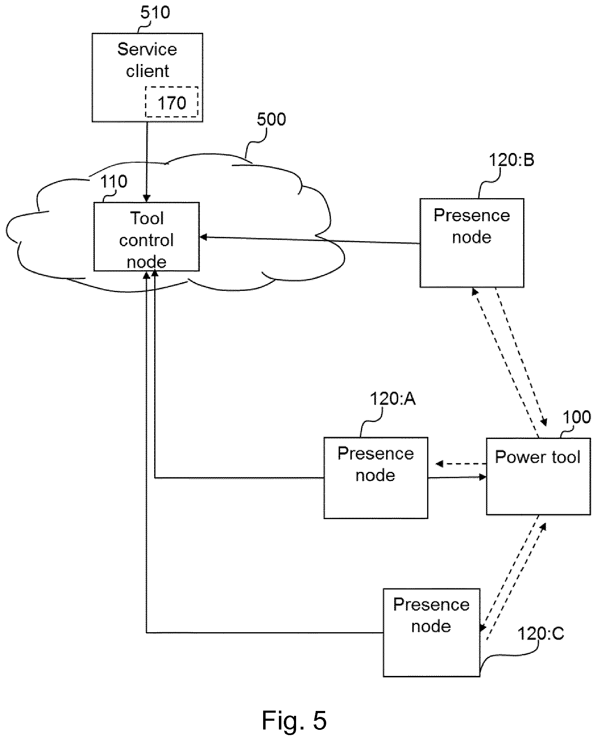

Fig. 5, shows an overview of the solution from a positioning perspective, comprising a plurality of presence nodes 120. The solution may further comprise a tool control node 110 comprising for instance a presence node 120. The control node 110 is arranged to transmit a positioning request message, including an identification of the power tool 100, to a plurality of presence nodes 110. Such plurality of presence nodes may be a closed user group of users which have agreed to use a specific service, a random group of presence nodes 120 located in the vicinity of the control node 110, an open user community which users may subscribe to, an ad hoc network, or a meshed network, or similar. The control node 110 is further arranged to receive at least one response to the positioning request message, including a calculated distance to the power tool 100 from the presence node 120, and a position of the presence node 120 as well as determining a position of the power tool 100 by calculation of the distance of the power tool 100 from the presence node 120 in combination with the position of the at least one presence node 100. In an example of the solution, the control node 110 may be arranged to calculate the position of the power tool 100 using any of triangulation, multilateration or trilateration upon receiving responses to the position request message from a plurality of presence nodes 120. According to an embodiment, the control node 110 is hosted by a presence node 120, i.e. the control node 110 may itself be used to the determined the position of the power tool 100.

In an example of the solution, the communication with the power tool 100 may be encrypted. By encryption of the communication between power tool 100 and other nodes, unauthorized access to the power tool 100 may be prevented, as well as man-in-the-middle types of attacks. In an example of the solution, the tool 100 may have a physical tamper protection. A physical tamer protection may prevent or reduce the risk of unauthorized physical access to the power tool 100. The physical tamer protection may also prevent or reduce the risk of unauthorized physical access to key components of the power tool 100.

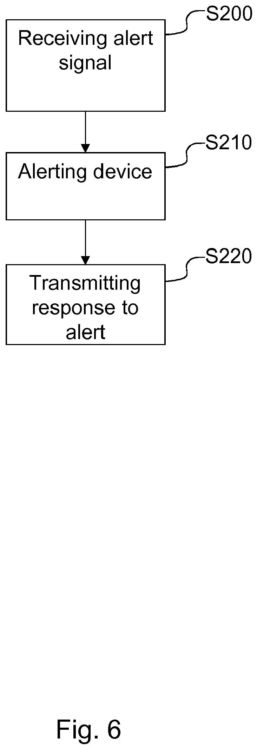

Fig. 6 shows a flowchart of a method in a tool control node 110 for enabling unlocking and locking of a tool for prevention of unauthorized use. The method comprises transmitting an unlock message to the tool 100, where the message includes an instruction to unlock the tool 100. The method further includes counting an authorization time period from transmission of the unlock message to the tool 100, wherein when the counted authorization time period exceed a predetermined threshold, the method further comprises transmitting of a lock message including an instruction to lock the tool (100), thereby enabling prevention of unauthorized use of the tool 100 by remote unlocking and locking.

In an example of the solution, when a use time period end may be beyond the authorization time period end, a second unlock message may be transmitted to the tool 100 before the predetermined authorization time period threshold is reached, such that the power tool 100 remains unlocked. The authorization time period may for example be 24 hours, i.e. a power tool 100 may be used for up to 24 hours, and at the end of the 24 hours the power tool 100 may be locked from normal operation, unless a second unlock message may be transmitted from the tool control node 110 to the power tool 100. The authorization period may be in a range from seconds up to days or weeks, depending on practical implementation.

The use time period may be a time period of an intended use period on a construction site, for example a month. The use period may be in a range from single hours up to months or even years. A use time period may be possible to interrupt, or change to a shorter or longer period. An example is where a customer of a rented power tool 100, may want to extend the rental period, or when a customer not has paid invoices, then the use time period may be extended, or interrupted. In the invoicing case, an unlock message may be transmitted from the tool control node 110 to the power tool 100, when the invoice is paid, such that the rental customer then may continue to use the power tool 100 under normal operation.

In an example of the solution, for example illustrated in Fig. 4, a position message including an alert signal may be transmitted to the power tool 100, thereby enabling positioning of the tool (100).

In an example of the solution, a delegated authorization to transmit unlock and lock messages to a specified power tool (100) message including the instruction to unlock the tool (100) may be transmitted to a presence node (120). Fig. 5 shows the tool control node 110, which may transmit the delegation to one of or all of the presence nodes 120:1, 120:B, 120:C. Fig. 5 also illustrated how the presence nodes 120:1, 120:B, 120:C may cooperate for positioning of a missing power tool 100. In an example of the solution, an annulation of the delegated authorization may be transmitted to the presence node (120).

The power tool 100, for example illustrated in Fig. 2, is adopted to enable unlocking and locking of the power tool 100 for prevention of unauthorized use. The power tool 100 is adopted to receive an unlock message to the control unit 210, where the message includes an instruction to unlock the tool 100. The power tool 100 is further adopted to unlock the power tool 100 according to the instruction by the control unit 210 via the actuator unit 250. The power tool 100 is further adopted to count an authorization time period from reception of the first message to the control unit 210 by the counter 230, wherein when the counted authorization time period exceed a predetermined threshold, the power tool 100 is locked by the control unit 210 via the actuator unit 250, thereby enabling prevention of unauthorized use of the power tool 100 by remote unlocking and locking.

Fig. 1 and Fig. 5 et. al. shows the tool control node 110 adopted to enable unlocking and locking of a tool for prevention of unauthorized use. The tool control node 110 is adopted to transmit the unlock message to the tool 100, the message including an instruction to unlock the tool 100. The tool control node 110 is further adopted count the authorization time period from transmission of the unlock message to the tool 100, wherein when the counted authorization time period exceed a predetermined threshold, tool control node 110 is adopted to transmit the lock message including an instruction to lock the tool 100, thereby enabling prevention of unauthorized use of the tool 100 by remote unlocking and locking.

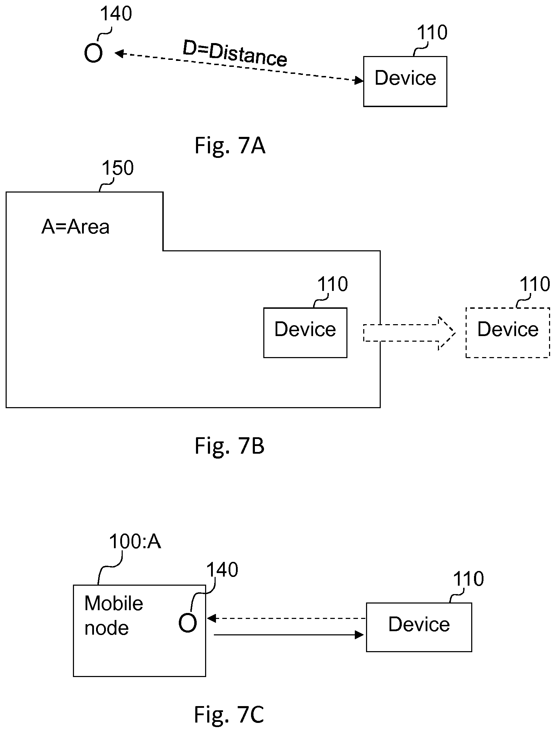

Fig. 7A shows a block diagram over a situation wherein a power tool 100 is at a certain distance from a geographical point 840. The tool control node 110 may be arranged to determine whether the position of the power tool 100 is within a predefined distance D from the geographical point 840, or if the power tool 100 is outside the predetermined distance. According to one embodiment shown in 7B, the tool control node 110 determines the position by comparing the position of the power tool 100 with a set geographical point 840 and calculates the distance between them. According to another embodiment as is further disclosed in Fig. 7C, the geographical point 840 is defined by the location of a presence node 110. The position of the presence node 110 may be dynamic.

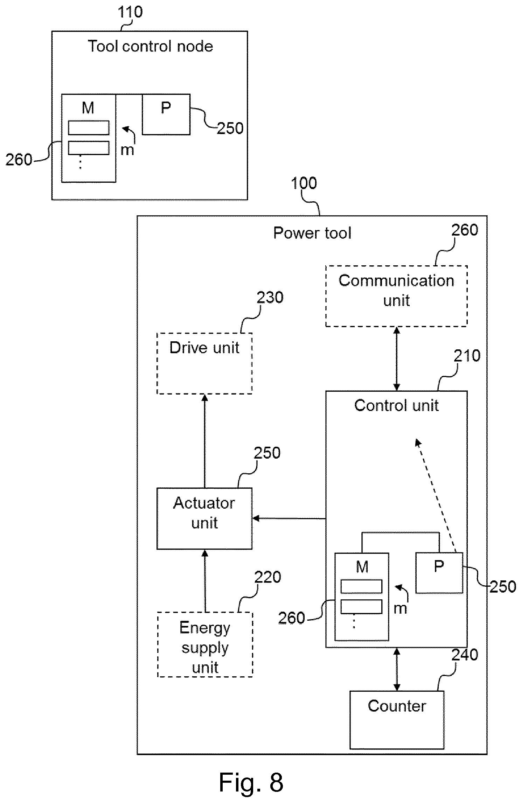

Now looking at Fig. 8. The power tool 100 and the tool control node 110 described above may be implemented, by means of program modules of a respective computer program comprising code means which, when run by processor "P" 250 causes the power tool 100 and the tool control node 110 to perform the above-described actions. The processor P 250 may comprise a single Central Processing Unit (CPU), or could comprise two or more processing units. For example, the processor P 250 may include general purpose microprocessors, instruction set processors and/or related chips sets and/or special purpose microprocessors such as Application Specific Integrated Circuits (ASICs). The processor P 250 may also comprise a storage for caching purposes.

Each computer program may be carried by computer program products "M" 260 in the power tool 100 and the tool control node 110, shown in Fig. 1, 2, 4, 5, et al, in the form of memories having a computer readable medium and being connected to the processor P. Each computer program product M 260 or memory thus comprises a computer readable medium on which the computer program is stored e.g. in the form of computer program modules "m". For example, the memories M 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the power tool 100 and the tool control node 110.

In an example embodiment of the solution the technology could be used for authorization in relation to other purposes than theft prevention. Some power tools requires special skills from the operator and should therefore not be handled by any user, one example is a woodwork-class for educational purpose where some machines in the class room might be locked to a presence node 110 possessed by the teacher, hence preventing students from using machinery while the teacher is not in the vicinity. Another example is for use in DIY (do it yourself) tools for home users where the technology could be adapted as, for example, a child look, allowing parents to store the power tools in areas were children potentially could locate them.

In the following a few examples of positioning techniques is described. The examples are for illustration of how a power tool 100 may be determined in direction, distance, and/or position. These examples are not limiting other techniques to be used.

Closest presence node 120. The most basic of the location determination techniques, is to identify the location based on the presence node 120 that is closest to the power tool 100. This may be done by looking at the association between the power tool 100 and the presence node 120 or by measuring signal strength.

Calculation of the approximately distance between the power tool 100 and one or more presence nodes 120. This technique is called lateration. The distance may be calculated based on signal strength or timing information.

Received Signal Strength Indication (RSSI) - Signal strength is a measurement on how strongly a transmitted signal is being received at a particular distance from the transmitter. The signal strength varies with distance, obstacles and interfering radio frequency signals. Multi path fading also affect the signal strength. In Wi-Fi networks, the signal strength is defined as Received Signal Strength Indication (RSSI). RSSI may be measured by the presence node 120 Link Quality Indicator (LQI) is a metric of the current quality of the received signal. The LQI may provide an estimate of how easily a received signal may be demodulated by accumulating the magnitude of the error between ideal constellations and the received signal over the 64 symbols immediately following the sync word.

Time Difference of Arrival (TDoA, also time of flight) - Distance may be calculated based on signal propagation time. Radio waves travel at a known speed through the wireless medium. Thus, if the time of transmission and time of signal arrival are known, the distance may be computed. Time Difference of Arrival (TDoA) is an example of such a technique. In TDoA, the position may be computed based on the difference in time when the signal arrives at different presence nodes 120.

Angle (AoA) - Instead of timing information, angles may be used to calculate the position. At each access point, the wireless signal arrives at a certain angle. By using geometric relationships between the angles of arrival at two presence nodes 120, the estimated location may be computed.

Triangulation and Trilateration, - When the location is estimated based on angle measurements from three or more presence nodes 120 the method is referred to as triangulation. The signal strength or timing information from several access points may also be used together to form coverage circles and intersection points. If the distance from at least three different presence nodes 120 may be calculated, this technique is known as trilateration. With the use of algorithms, the power tool 100 most likely position may be pointed based on the information from the different presence nodes 120. The more presence nodes 120 that contribute in computing the location, the more likely it is to get an accurate approximation.

Location Patterning - None of the above position determination techniques take into account signal propagation characteristics, such as reflection, attenuation and multi-path fading. However, with the location patterning technique, such characteristics of the actual wireless medium considered in the position computation. This location patterning technique may need calibration, in order to record how the wireless signals propagate throughout the environment. During this calibration phase, RF characteristics and real world data regarding how obstacles affect the propagation may be collected and pre-stored in a database. This information may then be compared with real-time information from the presence nodes 120 to achieve a more accurate position approximation.

Multiple Range Estimation Locator MREL (Multiple Range Estimation Location) used with Andrews Location Measurement Units (LMUs). MREL may use the transmission time and the time of arrival of the signal to determine a circular range ring, where the power tool 100 may be located. The location may then estimated by the best intersection of the multiple range-rings. Conversely, TDoA calculates the difference in the time of arrival of the mobile signal between multiple pairs of receivers. The differences in arrival time determine hyperbolic curves between receivers of where the power tool 100 may be. The location may then be estimated by the best intersection of the multiple hyperbolic curves.

In an embodiment, distance or position may be determined by usage of at least one of: association or signal strength, timing information, Received Signal Strength Indication (RSSI), Link Quality Indicator (LQI), Time Difference of Arrival/Time-of-Arrival (TDoA/TOA), Angle (AoA), Triangulation and/or Trilateration, Location Patterning, Multiple Range Estimation Locator MREL (Multiple Range Estimation Location), in combination with anyone else of the mentioned solutions.

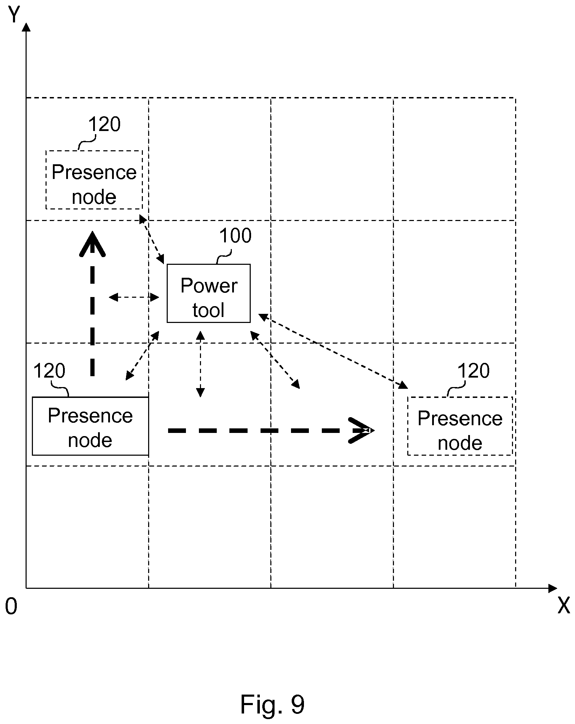

Fig. 9 illustrates an embodiment of the solution. A presence node 120 may be relocated to different positions. The different positions may be represented in a coordinate system. An example is where the start point of the presence node 120 is determined as coordinate "0". When the presence node 120 is relocated and at each point where a signal is received from the power tool 100, the new coordinate is determined. There by it may be possible to by usage of one presence node 120 simulate a plurality of presence nodes 120, where the simulated plurality of presence nodes 120 may better determine a position of a power tool 100, than a single presence node 120. A presence node 120 may determine its coordinate by use of GPS, etc. The presence node 120 may also determine a relative coordinate by usage of for example one of gyro, magnetic compass, accelerometer, tilt sensor, gyroscope, altimeter, not limiting to other type of sensors for measuring movements and/or relative positions.

In an embodiment, not shown in Fig. 9, the coordinate system may be a three dimensional coordinate system, such when a presence node 120 is relocated and during the relocation determines three dimensional coordinates for each signal received from the power tool 100.

A user of a presence node 120 may by moving around, simulate a group of users where each user has a presence node 120, thereby it may be possible to better determine a position of a power tool 100 than with a single presence node 120 stationary at one point.

In an embodiment, the time difference of arrival is measured by the power tool 100, instead of the presence node 120. An illustrative example is where at least one presence node 120 transmits a signal, such an alert signal or any other signal, such that the power tool 100 may measure the time of flight from the presence node 120 to the power tool 100. The power tool 100 may transmit the response to the alert signal, or any other signal, the response including the identification of the power tool 100 and also the measured transmission time between the presence node 120 and the power tool 100. The power tool 100 may additionally, based on the measured transmission time between the presence node 120 and the power tool 100, determine the distance between the presence node 120 and the power tool 100. The response transmitted by the power tool 100 may then include: identification of the power tool 100, measured transmission time between the presence node 120 and the power tool 100, and the determined distance between the presence node 120 and the power tool 100. In an embodiment, the time may be measured with an accuracy down to microseconds. In another embodiment, the time may be measured with an accuracy down to nanoseconds.

There may be advantages with the power tool 100 measuring the time of arrival, time difference of arrival or time of flight, instead of the presence node 120. An advantage may be that the power tool 100 may be easier to adopt for measuring the signals time of flight, than adopting the presence node 120 for measuring the time. Another advantage may be that the power tool 100 may be adapted to measure time with a better accuracy. Another advantage may be that by performing measurement in the device, more presence nodes 120 may participate in positioning a power tool 100 with a better accuracy then only presence node 120 with support for measuring the time. Another advantage with measuring time in the power tool 100 is that a plurality of additional sources for determination of the distance between a mobile terminal and a power tool 100 may enable avoidance of signal reflections and other disturbances.

In a situation where there is a plurality of presence nodes 120, the power tool 100 may transmit a response to each presence node 120, from which the power tool 100 has received a valid identification. The response may include any of: the identification, measured transmission time, and determined distance. The plurality of presence nodes 120 may better determine the position of the power tool 100.

The presence nodes can further be utilized for positioning of tools through Time of Arrival. Such positioning is not limited to pear-to-pear networks and can thereby be any form of network communication, comprising other network communication units such as for example access points.

According to one aspect of the present solution, a method is provided wherein a first node for determining the distance between two nodes in a communication network utilizes the media access control layer (MAC-layer) present in multiple standards, such as the IEEE 802.11x standard.

It has been shown that network communication conducted within the MAC-layer without the involvement of higher level layers provide processing times that are relatively constant. The MAC-layer is adapted to communicate the information of high level layers as one of its tasks but some frames can be transmitted standalone by the MAC-layer. By utilizing those frames, and/or, modifying behavior of a MAC-layer in a wireless communication network by adding additional features, processing times can be changed from an unreliable and changeable time factor to an approximated constant. The possibility to approximate the processing time makes it possible to subtract the processing time and utilize Time of Arrival / Time of Flight measurements. The methods described below thereby provide an enhanced system for determining the distance between two nodes in a communication network by significantly reduce the problem of previous methods.

This can be done in an open user community, as previously described, wherein users subscribes to, an ad hoc network, or a meshed network, or similar. Such method can for example be conducted in a first presence node adapted for determining the distance between said first presence node and a second presence node in a wireless communication network. The first presence node comprises a network communication unit with a medium access control layer (MAC-Layer), and the first presence node performs a method comprising the steps:
- transmitting a response request message,
- starting a first counter at transmission of said response request message,
- receiving a response to said response request message,
- stopping the counter at reception of the response to said response request message,
- determining based on the counter result the distance between said first and second presence node,
   wherein
   said counter result is the period from transmission of said response request message to the arrival of said response in the medium access control layer (MAC-Layer) of said first presence node network communication unit.

Positioning could also be accomplished through nodes in a wireless communication network, comprising a network communication unit with a medium access control layer (MAC-Layer), said node configured to calculate the Time of Arrival and/or Time of Flight based on a counted time from transmission of a response request message in the medium access control layer of said node to the corresponding arrival of a response to said response request message in the medium access control layer (MAC-Layer) of said node.

The counter can in one embodiment count processor cycles based on for example a central processing unit clock frequency. It is further understood that the counter can be any means arranged in a node, or attached hardware or software, which can directly or indirectly be used to determine a passed time.

For enablement of positioning determination through Time of Arrival based on MAC-Layer communication, an additional clock may be added to at least one node in a wireless communication network that uses a higher clock frequency than the standard clock. For example, in an IEEE 802.11x wireless communication network system the 1 MHz clock frequency may be complemented with an additional clock that provides better resolution for distance determination. In a preferred embodiment is such a complementary clock arranged with a frequency at 30-50 MHz, 50-500 MHz, 100 MHz or higher, or approximately 40 MHz.

RTS and CTS messages are handled in the MAC-layer of a network communication unit structure and thereby have the advantage of relatively stable processing times. This applies not only between different version of the same node but also between different sorts of nodes, such as mobile phones, access points, Wi-Fi-tags, etc. Furthermore, RTS and CTS messages are part of some wireless network communication standards and are thereby always present in devices following those standards.

For the determination of the position, wireless communication networks, such as for IEEE 802.11x, Bluetooth, ZigBee, or any other wireless communication network can be used. For example, a first presence node transmits a Request-to-Send message (RTS) and a second presence node response with a Clear-to-Send message (CTS) before any data is transferred. The RTS and CTS messages may be handled in the MAC-Layers of both the first presence node and the second presence node and may be thereby not affected of processing times in the CPUs of the nodes. The Time of Arrival / Time of Flight can thereby be calculated and used for distance determination and positioning.

It is further understood that different frequencies could be used. For example could frequencies from 400 MHz up to 5,5 GHz preferably be used in different embodiments of the invention.

While the solution has been described with reference to specific exemplary embodiments, the description is generally only intended to illustrate the inventive concept and should not be taken as limiting the scope of the solution. For example, the terms "power tool", "appliances", "presence node" and "tool control node" have been used throughout this description, although any other corresponding nodes, functions, and/or parameters could also be used having the features and characteristics described here. The solution is defined by the appended claims.

## Claims

1. Method in a first presence node (120) adapted for determining the distance between said first presence node and a second presence node in a wireless communication network, wherein said first presence node comprises a network communication unit with a medium access control layer (MAC-Layer), and the first presence node performs a method comprising the steps:
- transmitting a response request message,
- starting a first counter at transmission of said response request message,
- receiving a response to said response request message,
- stopping the counter at reception of the response to said response request message,
- determining based on the counter result the distance between said first and second presence node,
wherein
said counter result is the period from transmission of said response request message to the arrival of said response in the medium access control layer (MAC-Layer) of said first presence node network communication unit.

2. Method according to claim 1, wherein the first presence node transmits a Request-to-Send message (RTS) and the second presence node response with a Clear-to-Send message (CTS) before any data is transferred that affects the processing time in the CPUs of the first presence node and the second presence node.

3. Method according to claim 2, wherein the RTS and CTS messages are handled in the MAC-Layers of both the first presence node and the second presence node.

4. Method according to any one of claims 1-3, wherein Time of Arrival or Time of Flight is calculated and used for distance determination and positioning.

5. Method according to any one of claims 1-4, wherein a radio frequency from 400 MHz to 5,5 GHz is used.

6. A method in a first presence node (120) for enabling unlocking and locking of a tool for prevention of unauthorized use of the tool, the method comprising:
- transmitting a first unlock message to the tool (100), the message including an instruction to unlock the tool (100),
- counting an authorization time period from transmission of the unlock message to the tool (100),
- when a use time period end is beyond the authorization time period end,
- transmitting of a second unlock message to the tool (100) before the predetermined authorization time period threshold is reached, such that the power tool (100) remains unlocked,
- transmitting of a position message including an alert signal and a response request message to the power tool (100), thereby enabling positioning of the tool (100) according to the method of any one of claims 1-5,
- when the counted authorization time period exceed a predetermined threshold,
- transmitting a lock message including an instruction to lock the tool (100), thereby enabling prevention of unauthorized use of the tool (100) by remote unlocking and locking.

7. A computer program, comprising computer readable code means, which when run in any one of a power tool (100), a tool control node (110), and a presence node (120) is arranged to enable unlocking and locking of the power tool (100) according to claim 6 and cause the power tool (100) to perform the corresponding method according to any of the claims 1 to 5.

8. A computer program product, comprising a computer readable medium and a computer program according to claim 7, wherein the computer program is stored on the computer readable medium.

## Patentansprüche

1. Verfahren in einem ersten Präsenzknoten (120), das angepasst ist zur Bestimmung des Abstands zwischen dem ersten Präsenzknoten und einem zweiten Präsenzknoten in einem drahtlosen Kommunikationsnetzwerk, wobei der erste Präsenzknoten eine Netzwerkskommunikationseinheit umfasst, die eine Medienzugriffssteuerungsschicht (MAC-Schicht) ist, und der erste Präsenzknoten ein Verfahren ausführt, umfassend die Schritte:
- Senden einer Antwortanforderungsmeldung,
- Starten eines ersten Zählers bei Senden der Antwortanforderungsmeldung,
- Empfangen einer Antwort auf die Antwortanforderungsmeldung,
- Anhalten des Zählers bei Empfang der Antwort auf die Antwortanforderungsmeldung,
- Bestimmen des Abstands zwischen dem ersten und dem zweiten Präsenzknoten auf der Grundlage des Zählerergebnisses,
wobei
das Zählerergebnis der Zeitraum von Senden der Antwortanforderungsmeldung bis zum Eingang der Antwort auf der Medienzugriffssteuerungsschicht (MAC-Schicht) des ersten Präsenzknotens der Netzwerkskommunikationseinheit ist.

2. Verfahren nach Anspruch 1, wobei der erste Präsenzknoten eine Sendeanforderungsmeldung (RTS) sendet und der zweite Präsenzknoten mit einer Sendebereitschaftsmeldung (CTS) antwortet, bevor Daten gesendet werden, die sich auf die Verarbeitungszeit in den CPUs des ersten Präsenzknotens und des zweiten Präsenzknotens auswirken.

3. Verfahren nach Anspruch 2, wobei die RTS- und CTS-Meldungen in den MAC-Schichten sowohl des ersten Präsenzknotens als auch des zweiten Präsenzknotens gehandhabt werden.

4. Verfahren nach einem der Ansprüche 1 - 3, wobei die Eingangszeit oder Flugzeit berechnet und für die Abstandsbestimmung und Positionierung verwendet wird.

5. Verfahren nach einem der Ansprüche 1 - 4, wobei eine Funkfrequenz von 400 MHz bis 5,5 GHz verwendet wird.

6. Verfahren in einem ersten Präsenzknoten (120) zur Ermöglichung von Entriegelung und Verriegelung eines Werkzeugs zur Verhinderung unautorisierter Benutzung des Werkzeugs, wobei das Verfahren umfasst:
- Senden einer ersten Entriegelungsmeldung an das Werkzeug (100), wobei die Meldung eine Anweisung zur Entriegelung des Werkzeugs (100) beinhaltet
- Zählen eines Autorisierungszeitraums ab Senden der Entriegelungsmeldung an das Werkzeug (100),
- wenn ein Ende der Zeit des Verwendungszeitraums hinter dem Ende der Zeit des Autorisierungszeitraums liegt,
- Senden einer zweiten Entriegelungsmeldung an das Werkzeug (100), bevor der vorgegebene Grenzwert der Zeit des Autorisierungszeitraums erreicht ist, sodass das kraftgetriebene Werkzeug (100) entriegelt bleibt,
- Senden einer Positionsmeldung, die ein Alarmsignal beinhaltet, und einer Antwortanforderungsmeldung an das kraftgetriebene Werkzeug (100), und dadurch Ermöglichen der Positionierung des Werkzeugs (100) nach dem Verfahren nach einem der Ansprüche 1 - 5,
- wenn die gezählte Zeit des Autorisierungszeitraums einen vorgegebenen Grenzwert überschreitet,
- Senden einer Verriegelungsmeldung, die eine Anweisung zur Verriegelung des Werkzeugs (100) beinhaltet und dadurch Verhindern von unautorisierter Verwendung des Werkzeugs (100) über Fernentriegelung und Verriegelung ermöglicht.

7. Rechnerprogramm, das rechnerlesbare Codemittel umfasst, die, wenn sie in einem eines kraftgetriebenen Werkzeugs (100) und eines Werkzeugsteuerknotens (110) laufen, und wenn ein Präsenzknoten (120) angeordnet ist, um Entriegelung und Verriegelung des kraftgetriebenen Werkzeugs (100) nach Anspruch 6 zu ermöglichen, verursachen, dass das kraftgetriebene Werkzeug (100) das entsprechende Verfahren nach einem der Ansprüche 1 bis 5 ausführt.

8. Rechnerprogrammprodukt, umfassend ein rechnerlesbares Medium und ein Rechnerprogramm nach Anspruch 7, wobei das Rechnerprogramm auf dem rechnerlesbaren Medium gespeichert ist.

## Revendications

1. Procédé dans un premier nœud de présence (120) conçu pour déterminer la distance entre ledit premier nœud de présence et un second nœud de présence dans un réseau de communication sans fil, dans lequel ledit premier nœud de présence comprend une unité de communication de réseau ayant une couche de contrôle d'accès au support (couche MAC) et le premier nœud de présence réalise un procédé comprenant les étapes consistant :
- à transmettre un message de demande de réponse,
- à mettre en marche un premier compteur lors de la transmission dudit message de demande de réponse,
- à recevoir une réponse au dit message de demande de réponse,
- à arrêter le compteur lors de la réception de la réponse au dit message de demande de réponse,
- à déterminer, sur la base du résultat de compteur, la distance entre ledit premier et ledit second nœud de présence,
dans lequel
ledit résultat de compteur est la période entre la transmission dudit message de demande de réponse et l'arrivée de ladite réponse dans la couche de contrôle d'accès au support (couche MAC) de ladite unité de communication de réseau du premier nœud de présence.

2. Procédé selon la revendication 1, dans lequel le premier nœud de présence transmet un message de demande d'envoi (RTS) et le second nœud de présence répond avec un message de préparation à l'envoi (CTS) avant que de quelconques données ne soient transférées qui affectent le temps de traitement dans les unités CPU du premier nœud de présence et du second nœud de présence.

3. Procédé selon la revendication 2, dans lequel les messages de demande RTS et de préparation CTS sont traités dans les couches de contrôle MAC à la fois du premier nœud de présence et du second nœud de présence.

4. Procédé selon l'une quelconque des revendications 1 à 3, dans lequel le temps d'arrivée ou le temps de vol est calculé et utilisé pour une détermination de distance et un positionnement.

5. Procédé selon l'une quelconque des revendications 1 à 4, dans lequel une fréquence radio comprise entre 400 MHz et 5,5 Ghz est utilisée.

6. Procédé dans un premier nœud de présence (120) pour permettre le déverrouillage et le verrouillage d'un outil pour la prévention de l'utilisation non autorisée de l'outil, le procédé consistant :
- à transmettre un premier message de déverrouillage à l'outil (100), le message comprenant une instruction pour déverrouiller l'outil (100),
- à compter une période de temps d'autorisation à partir de la transmission du message de déverrouillage à l'outil (100),
- lorsqu'une fin de période de temps d'utilisation est au-delà de la fin de période de temps d'autorisation,
- à transmettre un second message de déverrouillage à l'outil (100) avant que le seuil de période de temps d'autorisation prédéterminée ne soit atteint de telle sorte que l'outil électrique (100) reste déverrouillé,
- à transmettre un message de position comprenant un signal d'alerte et un message de demande de réponse à l'outil électrique (100), ce qui permet le positionnement de l'outil (100) selon le procédé selon l'une quelconque des revendications 1 à 5,
- lorsque la période de temps d'autorisation comptée dépasse un seuil prédéterminé,
- à transmettre un message de verrouillage comprenant une instruction pour verrouiller l'outil (100), ce qui permet la prévention d'une utilisation non autorisée de l'outil (100) au moyen d'un déverrouillage et d'un verrouillage à distance.

7. Programme d'ordinateur comprenant un moyen de code lisible par ordinateur, qui, lorsqu'il est exécuté par l'un quelconque d'un outil électrique (100), d'un nœud de commande d'outil (110) et d'un nœud de présence (120), est conçu pour permettre le déverrouillage et le verrouillage de l'outil électrique (100) selon la revendication 6 et pour amener l'outil électrique à effectuer le procédé correspondant selon l'une quelconque des revendications 1 à 5.

8. Produit-programme d'ordinateur comprenant un support lisible par ordinateur et un programme d'ordinateur selon la revendication 7, dans lequel le programme d'ordinateur est stocké sur le support lisible par ordinateur.
